## Europäisches Patentamt
## European Patent Office
## Office européen des brevets

(19)

(11) Veröffentlichungsnummer: **0 175 317**
**B1**

(12) # EUROPÄISCHE PATENTSCHRIFT

(45) Veröffentlichungstag der Patentschrift:
19.04.89

(21) Anmeldenummer: 85111665.7

(22) Anmeldetag: 14.09.85

(51) Int. Cl.⁴: **C 08 F 20/04,** C 08 F 22/02,
C 08 F 2/10

(54) Verfahren zur Herstellung von Carboxylgruppen enthaltenden Polymerisaten.

(30) Priorität: 18.09.84 DE 3434139

(43) Veröffentlichungstag der Anmeldung:
26.03.86 Patentblatt 86/13

(45) Bekanntmachung des Hinweises auf die Patenterteilung:
19.04.89 Patentblatt 89/16

(84) Benannte Vertragsstaaten:
CH DE FR GB IT LI

(56) Entgegenhaltungen:
EP-A-0 019 097
GB-A-1 291 812
GB-A-2 050 387
US-A-2 789 099
US-A-3 377 330
US-A-3 475 391

(73) Patentinhaber: BASF Aktiengesellschaft, Carl-Bosch- Strasse 38, D-6700 Ludwigshafen (DE)

(72) Erfinder: Denzinger, Walter, Wormser Landstrasse 65, D-6720 Speyer (DE)
Erfinder: Hartmann, Heinrich, Dr., Weinheimer Strasse 46, D-6703 Limburgerhof (DE)
Erfinder: Perner, Johannes, Dr., Ginsterweg 4, D-6730 Neustadt (DE)
Erfinder: Raubenheimer, Hans- Juergen, Benzstrasse 6, D-6834 Ketsch (DE)

EP 0 175 317 B1

**Beschreibung**

Es ist bekannt, ethylenisch ungesättigte Carbonsäuren, wie Acrylsäure, Methacrylsäure und Maleinsäure in wäßriger Lösung unter Verwendung von Polymerisationsinitiatoren, gegebenenfalls in Anwesenheit von anderen ethylenisch ungesättigten, copolymerisierbaren Monomeren zu polymerisieren. Je nach Zusammensetzung der Polymerisate sind sie in Form der freien Säuren bzw. in teil- oder vollständig neutralisierter Form in Wasser löslich. Die nach den bekannten Verfahren der Lösungspolymerisation in großtechnischem Maßstab hergestellten Polymerisatlösungen sind mehr oder weniger stark gefärbt. Dadurch wird die Anwendungsbreite dieser Produkte eingegrenzt.

Um solche Verfärbungen der Polymerisatlösungen zu vermeiden, ist es aus der US-PS-3 635 915 bekannt, die Polymerisation in Gegenwart von Natriumhydrogensulfit durchzuführen. Die Mitverwendung von Natriumhydrogensulfit bei der Polymerisation beeinflußt jedoch den Ablauf der Polymerisation so stark, daß Probleme mit der Wärmeabführung auftreten können. Aus der DE-OS-2 556 258 ist es außerdem bekannt, wäßrige Polymerisatlösungen mit Natriumborhydrid zu behandeln, um eine Aufhellung der Polymerlösung zu erreichen. Ein zusätzlicher Verfahrensschritt verteuert jedoch die Herstellkosten der Polymerisatlösung.

Aus der US-A-2 789 099 ist ein Verfahren zur Herstellung von wäßrigen Lösungen von Polyacrylsäure bekannt, bei dem man Acrylsäure in wäßriger Lösung in Gegenwart von Wasserstoffperoxid als Polymerisationsinitiator und von Natriumhypophosphit als viskositätsregulierendes Mittel polymerisiert. Gemäß den Beispielen 3 bis 10 und den Angaben in den Patentansprüchen wird die Polymerisation noch zusätzlich in Gegenwart von Kupfersalzen durchgeführt. Man erhält bei Raumtemperatur lagerstabile und praktisch nicht zur Gelbildung neigende wäßrige Polyacrylsäurelösungen.

Der vorliegenden Erfindung liegt die Aufgabe zugrunde, ein Verfahren zur Herstellung von Carboxylgruppen enthaltenden Polymerisaten, die zumindest in neutralisierter Form wasserlöslich sind, durch Polymerisieren von monoethylenisch ungesättigten C$_3$- bis C$_5$-Carbonsäuren, gegebenenfalls mit carboxylgruppenfreien copolymerisierbaren ethylenisch ungesättigten Monomeren in wäßriger Lösung unter Verwendung von Polymerisationsinitiatoren zur Verfügung zu stellen, bei dem man direkt farblose bzw. nur wenig gefärbte wäßrige Polymerisatlösungen erhält.

Die Aufgabe wird erfindungsgemäß dadurch gelöst, daß man die Polymerisation in Gegenwart von 0,01 bis 5 Gew.-%, bezogen auf die Monomeren, an Verbindungen aus der Gruppe hypodiphosphorige Säure, wasserlösliche Salze der hypodiphosphorigen Säure, phosphorige Säure, wasserlösliche Salze der phosphorigen Säure, diphosphorige Säure, wasserlösliche Salze der diphosphorigen Säure, wasserlöslichen -PO(OH)$_2$-Gruppen enthaltenden Verbindungen und/oder deren wasserlöslichen Salzen durchführt.

Nach dem erfindungsgemäßen Verfahren werden farblose bzw. nur wenig gefärbte Polymerisatlösungen erhalten, indem man eine monoethylenisch ungesättigte C$_3$-C$_5$-Carbonsäure unter den oben angegebenen Bedingungen polymerisiert. Es kommen sowohl Mono- als auch Dicarbonsäuren in Betracht, z. B. Acrylsäure, Methacrylsäure, Crotonsäure, Vinylmilchsäure, Maleinsäure, Fumarsäure, Aconitsäure, Itaconsäure, Mesaconsäure, Citraconsäure und Methylenmalonsäure. Vorzugsweise werden Homopolymerisate von Acrylsäure, Methacrylsäure, Maleinsäure oder Itaconsäure bzw. Copolymerisate aus Acrylsäure und Methacrylsäure oder Copolymerisate aus Acrylsäure und Maleinsäure und Copolymerisate aus Acrylsäure und Itaconsäure, Copolymerisate aus Methacrylsäure und Maleinsäure und Copolymerisate aus Methacrylsäure und Itaconsäure hergestellt. Die genannten Carbonsäuren können in jedem beliebigen Verhältnis miteinander copolymerisiert werden. Es ist selbstverständlich möglich, an Stelle von zwei der genannten Carbonsäuren auch drei oder vier verschiedene Carbonsäuren miteinander zu copolymerisieren.

Die genannten Carbonsäuren können gegebenenfalls mit carboxylgruppenfreien copolymerisierbaren ethylenisch ungesättigten Monomeren der Polymerisation unterworfen werden. Geeignete Comonomere, die je nach Löslichkeit des dabei gebildeten Copolymerisates bei der Polymerisation eingesetzt werden, sind beispielsweise Amide, Nitrile oder Ester von ethylenisch ungesättigten C$_3$- bis C$_5$-Carbonsäuren, z. B. Acrylamid, Methacrylamid, Methylacrylat, Methyl(meth)acrylat, Ethylacrylat, Ethyl(meth)acrylat, Hydroxyethylacrylat, Hydroxyethyl(meth)acrylat, Hydroxypropylacrylat, Hydroxypropyl(meth)acrylat, 1,4-Butandiolmonoacrylat, 1,4-Butandiolmono(meth)acrylat, Dimethylaminoethylacrylat, Dimethylaminoethyl(meth)acrylat, Diethylaminoethylacrylat, Diethylaminoethyl(meth)acrylat, sowie Vinylester, z. B. Vinylacetat, Vinylpropionat und Vinylbutyrat, sowie 2-Acrylamido-2-Methylpropansulfonsäure, Vinylsulfonsäure, Allylsulfonsäure, Vinylglykol, Allylalkohol, Ethylen, Propylen, Styrol, Methylstyrol und Butadien. Von den genannten Monomeren verwendet man vorzugsweise Vinylacetat, Diethylaminoethylacrylat, Dimethylaminoethylacrylat, Hydroxyethyl(meth)acrylat, Hydroxypropyl(meth)acrylat und Methylacrylat. Die basischen Acrylate, wie Dimethylaminoethylacrylat werden entweder in Form der Salze bzw. der quaternisierten Verbindungen, z. B. mit Benzylchlorid oder Methylchlorid quaternisiert, eingesetzt. Diese Gruppe von Comonomeren dient der Modifizierung der Carboxylgruppen enthaltenden Polymeren und ist zu 0 bis 40 Gew.-% am Aufbau der Copolymerisate beteiligt.

Die Polymerisation der Monomeren erfolgt in wäßriger Lösung unter Verwendung von Polymerisationsinitiatoren, vorzugsweise wasserlöslichen Initiatoren, z. B. Natriumpersulfat, Kaliumpersulfat, Ammoniumpersulfat, Wasserstoffperoxid, Azo-bis-(2-Aminopropan)hydrochlorid, 2,2'-Azo-bis-(N,N'-dimethylenisobutyramidin)dihydrochlorid und 2,2'-Azo-bis-(4-cyanopentansäure). Die Initiatoren werden entweder allein oder in Mischung verwendet, z. B. Mischungen aus Wasserstoffperoxid und Natriumpersulfat. Neben den wasserlöslichen Initiatoren können auch organische Peroxide, Hydroperoxide und Azoverbindungen verwendet werden, die nur wenig in Wasser löslich sind. Beispielsweise seien folgende Verbindungen genannt: Tert.-Butylperpivalat, 2,2'-Azo-bis-(valeronitril), Tert.-Butylper-2-ethylhexanoat, 2,2'-Azo-bis-(isobutyronitril), Tert.-Butylperbenzoat, Tert.-Butylhydroperoxid und p-Menthanhydroperoxid. Die Monomeren können auch unter Verwendung von Redox-Katalysatoren polymerisiert werden. Hierzu verwendet man beispielsweise als Reduktionsmittel Ascorbinsäure, Benzoin, Dimethylanilin sowie gegebenenfalls noch zusätzlich lösliche Komplexe und Salze von Schwermetallen. Dadurch ist es bekanntlich möglich, die Polymerisation bei tieferer Temperatur durchzuführen. Die Temperaturen bei der Polymerisation liegen zwischen 60 und 160, vorzugsweise zwischen 80 und 130°C. Bei Temperaturen oberhalb 100°C ist es selbstverständlich erforderlich, daß die Polymerisation unter Druck durchgeführt wird. Die Konzentrationen an Monomeren in den wäßrigen Lösungen betragen 20 bis 70, vorzugsweise 35 bis 60 Gew.-%.

Um Polymerisate eines unterschiedlichen Molekulargewichtsbereiches herzustellen, verwendet man als Molekulargewichtsregler die üblichen kettenabbrechenden Substanzen wie beispielsweise Ameisensäure, Hydroxylamin (als Sulfat oder Chlorid), SH-Gruppen enthaltende Verbindungen wie Thioglykolsäure, Thiopropionsäure, Mercaptoethanol und Thiomaleinsäure. Weitere Beispiele für Polymerisationsregler sind Allylalkohol und Butenol. Die Polymerisationsregler werden, sofern ihr Einsatz erforderlich ist, in Mengen bis zu 20 Gew.-%, bezogen auf die Monomeren, eingesetzt. Vorzugsweise polymerisiert man in Gegenwart von 0,5 bis 15 Gew.-% eines SH-Gruppen enthaltenden Polymerisationsreglers, bezogen auf die Monomeren.

Um farblose bzw. nur wenig gefärbte Polymerisatlösungen zu erhalten, wird die Polymerisation in Gegenwart von anorganischen Phosphorsäuren, in denen der Phosphor eine Oxidationszahl von 1 bis 4 hat, deren wasserlöslichen Salzen, wasserlöslichen $-PO(OH)_2$-Gruppen enthaltenden Verbindungen und/oder deren wasserlöslichen Salzen durchgeführt. Als wasserlösliche anorganische Phosphorverbindungen kommen beispielsweise hypodiphosphorige Säure, Natriumhypodiphosphit, phosphorige Säure sowie Mononatriumphosphit und Dinatriumphosphit, diphosphorige Säure und Natriumdiphosphit, hypodiphosphorige Säure und Natriumhypodiphosphit in Betracht. Aus dieser Gruppe von anorganischen Phosphorverbindungen setzt man vorzugsweise phosphorige Säure oder deren Natrium-, Kalium- und Ammoniumsalze ein.

Wasserlösliche $-PO(OH)_2$-Gruppen enthaltende Verbindungen können auch als Organophosphonsäuren bezeichnet werden, von denen folgende Verbindungen beispielhaft genannt seien: Methandiphosphonsäure, Propan-1,2,3-triphosphonsäure, Butan-1,2,3-tetraphosphonsäure, Polyvinylphosphonsäure, 1-Aminoethan-1,1-diphosphonsäure, 1-Amino-1-phenyl-1,1-diphosphonsäure, Aminotrismethylen-triphosphonsäure, Methylamino- oder Ethylaminobismethylendiphosphonsäure, Ethylendiaminotetramethylentetraphosphonsäure, Ethylentriaminopentamethylenpentaphosphonsäure, 1-Hydroxyethan-1,1-diphosphonsäure, Phosphonoessig- und Phosphonopropionsäure und deren Salze, wobei 1-Hydroxy-1,1-diphosphonsäure, sowie deren Dinatrium- und Tetranatriumsalze, Aminotrismethylentriphosphonsäure sowie das Pentanatriumsalz und Ethylendiaminotetramethylentetraphosphonsäure sowie deren Salze bevorzugt sind. Oftmals ist es vorteilhaft, mehrere Phosphorverbindungen zu kombinieren, wie beispielsweise Natriumhypophosphit und phosphorige Säure, phosphorige Säure und 1-Hydroxy-ethyliden1,1-diphosphonsäure-Dinatriumsalz und Aminotrimethylen-triphosphonsäure und 1-Hydroxyethan-1,1-diphosphonsäure. Sie können in jedem beliebigen Verhältnis miteinander gemischt und bei der Polymerisation eingesetzt werden.

Die zugesetzten Mengen betragen 0,01 bis 5 Gew.-%, berechnet auf eingesetzte Monomere, wobei der Bereich von 0,1 bis 1 Gew.-% besonders bevorzugt ist.

Bei der Herstellung wäßriger Lösungen von Homopolymerisaten verfährt man im allgemeinen so, daß man Wasser und eine geringe Menge des Monomeren (2 bis 5 % der Monomermenge, die polymerisiert werden soll) im Reaktor vorlegt, mit Stickstoff spült und den Reaktorinhalt auf die gewünschte Polymerisationstemperatur erhitzt. Anschließend gibt man die restliche Menge des Monomeren, den Initiator, gelöst in Wasser und gegebenenfalls den Molekulargewichtsregler über einen Zeitraum von 1 bis 10 Stunden, vorzugsweise innerhalb von 2 bis 8 Stunden dem Reaktor zu. Die Phosphorverbindungen werden vorzugsweise im Reaktor vorgelegt, können jedoch auch in der wäßrigen Monomerlösung oder separat davon dem Reaktor zugeführt werden. In einigen Fällen ist es von Vorteil, wenn etwa 10 % der Phosphorverbindungen im Reaktor vorgelegt und der Rest kontinuierlich mit den Monomeren zugegeben wird.

Bei der Copolymerisation von mehreren Monomeren, besonders wenn monoethylenisch ungesättigte Dicarbonsäuren eingesetzt werden, ist es zweckmäßig, die Dicarbonsäure im Reaktor vorzulegen und die restlichen Monomeren, den Initiator und gegebenenfalls den Molekulargewichtsregler über einen längeren Zeitraum zuzudosieren. Die Phosphorverbindung kann - wie bei der Homopolymerisation beschrieben - sowohl im Reaktor vorgelegt als auch teilweise vorgelegt bzw. mit den Monomeren zudosiert werden. Die ethylenisch ungesättigten Carbonsäuren können sowohl in der freien Säureform als auch in vollständig oder teilneutralisierter Form der Polymerisation unterworfen werden. In einer bevorzugten Ausführungsform neutralisiert man die Carboxylgruppen der Monomeren zu 20 bis 80, vorzugsweise 30 bis 70 % mit Alkali, vorzugsweise mit Natriumhydroxid. Sofern die carboxylfreien Monomeren zur Modifizierung der carboxylgruppenhaltigen Polymerisate eingesetzt werden, werden die carboxylgruppenfreien Monomeren entweder im Reaktor vorgelegt oder in Mischung oder separat von den carboxylgruppenhaltigen Monomeren zudosiert.

Die so hergestellten Polymerisate haben K-Werte (gemessen nach H. Fikentscher) von 8 bis 200, vorzugsweise von 12 bis 60 (gemessen an 2 Gew.-%-igen Natriumsalzlösungen der Polymeren bei einem pH-Wert von 7,0 - 7,5 und einer Temperatur von 25°C in Wasser. Den K-Werten 8 bis 200 entsprechen Molekulargewichte (Gewichtsmittel) von 500 bis 1 000 000, den K-Werten von 12 bis 60 Molekulargewichte von 1000 bis 100 000, gemessen mit Hilfe der Gel-Permeations-Chromatographie.

Die nach dem erfindungsgemäßen Verfahren hergestellten wäßrigen Polymerisatlösungen sind farblos bzw. nur schwach gefärbt und können direkt oder teilweise bis vollständig neutralisiert - die Neutralisation kann auch nach Abschluß der Polymerisation erfolgen - für die verschiedensten Einsatzgebiete, auf denen diese Polymeren bisher verwendet wurden, eingesetzt werden, z. B. Verwendung als Inkrustations- und Vergrauungsinhibitoren und als Dispersionsmittel für den Waschmittelsektor, zur Verhinderung der Kesselsteinbildung (Scale-Inhibitoren) und Dispergiermittel für Papierstreichpigmente. Als Dispergiermittel für Papierstreichpigmente finden vor allen Dingen Polymerisate Verwendung, deren K-Werte zwischen 12 und 30 liegen.

Die in den Beispielen angegebenen Teile sind Gewichtsteile, soweit nicht anders bezeichnet. Die K-Werte wurden nach H. Fikentscher, Cellulosechemie 13, 58 - 64 und 71 - 74 (1932) in wäßriger Lösung bei einer Temperatur von 25°C und einer Polymerkonzentration von 2 Gew.-% gemessen; dabei bedeutet $K = k \cdot 10^3$. Der pH-Wert bei der Messung betrug 7,0 bis 7,5.

Die Bestimmung der Molekulargewichte erfolgte durch Gel-PermeationsChromatographie (= GPC) mit wäßrigen Elutionsmitteln. Die Eichung der Trennsäulen erfolgte mit eng verteilten Polystyrolsulfonaten der Fa. Pressure Chem. Comp. und Umrechnung auf die molaren Masseneinheiten von Na-Polyacrylat nach dem universellen Eichprinzip von BENOIT (J. Chim. Phys. 63 (1966) 1507) unter Verwendung der Meßdaten von

SPATORICO und BEYER (J. Appl. Polym. Sci. 19 (1975) 2933. Diese Berechnung wurde auch auf die Copolymerisate angewandt.

Die Farbe der wäßrigen Polymerlösungen wurde durch Messung der Transmission der auf 10 Gew.-% mit Wasser verdünnten wäßrigen Polymerlösungen bestimmt. Die Messung der Transmission erfolgt in einem Spektralphotometer bei 400 nm Wellenlänge in einer Küvette mit 10 mm Durchmesser, wobei die Transmission von Wasser als 100 % angesetzt wurde.

**Beispiel 1**

In einem mit einem Rührer versehenen 6 l fassenden Reaktor aus Edelstahl wurden 1040 Teile Wasser, 50 Teile Acrylsäure und 12 Teile einer 50 %-igen wäßrigen phosphorigen Säure vorgelegt und in einem schwachen Stickstoffstrom auf eine Temperatur von 80°C erhitzt. Man bereitete drei verschiedene Zuläufe, von denen der erste Zulauf aus 2000 Teilen Acrylsäure, 205 Teilen Thioglykolsäure und 250 Teilen Wasser bestand, der zweite aus einer Lösung von 60 Teilen Ammoniumpersulfat in 300 Teilen Wasser und der dritte aus einer wäßrigen Lösung von 2 g Azo-bis-(2-Aminopropan)hydrochlorid in 50 Teilen Wasser. Die drei Zuläufe wurden voneinander getrennt innerhalb von 4 Stunden zum Reaktorinhalt gegeben. Die Polymerisation wurde während dieser Zeit bei einer Temperatur von 80°C durchgeführt und nach Beendigung des Zulaufs wurde das Reaktionsgemisch noch 1 1/2 Stunden bei einer Temperatur von 100°C nachpolymerisiert, dann auf 60°C abgekühlt und mit 1350 Teilen 50 %-iger wäßriger Natronlauge neutralisiert. Der K-Wert des Polymerisates betrug 18 entsprechend einem Molekulargewicht von 2500. Die Transmission einer auf 10 % Feststoffgehalt verdünnten wäßrigen Polymerlösung betrug 91 %.

**Beispiele 2 bis 3**

Das Beispiel 1 wird jeweils mit der Ausnahme wiederholt, daß die in Tabelle 1 angegebenen Phosphorverbindungen bei der Polymerisation vorgelegt wurden. Die K-Werte der so hergestellten Polymerisate betrugen jeweils 18 entsprechend einem Molekulargewicht von 2500. In Tabelle 1 sind die jeweils eingesetzten Phosphorverbindungen sowie die Transmission von wäßrigen Polymerlösungen angegeben, die auf einen Feststoffgehalt von 10 % verdünnt wurden.

**Vergleichsbeispiel 1**

Das Beispiel 1 wurde wiederholt, jedoch mit der Ausnahme, daß man in Abwesenheit von phosphoriger Säure arbeitete. Man erhielt zwar ebenfalls ein Polymerisat mit einem K-Wert von 18 (Molekulargewicht 2500), jedoch lag die Transmission einer 10 %-igen wäßrigen Polymerlösung bei 35 %.

**Tabelle 1**

| Beispiel | Teile | Zusatz an Phosphorverbindung | Transmission der 10 %-igen wäßrigen Polymerlösung [%] |
|---|---|---|---|
| 1 | 12 | phosphorige Säure, 50 %-ig | 91 |
| 2 | 24 | phosphorige Säure, 50 %-ig | 95 |
| 3 | 10 | Aminotrismethylentriphosphonsäure-Pentanatriumsalz | 98 |
| Vergleichsbeispiel 1 | - | - | 35 |
| Vergleichsbeispiel 2 | 20 | Natriumhypophosphit (NaPH$_2$O$_2$ · H$_2$O | 92 |

Beispiele 4 bis 11

In einem mit einem Rührer ausgestatteten und für das Arbeiten unter Druck geeigneten 8 l fassenden Edelstahlreaktor wurden 1070 Teile Wasser, 823,3 Teile Maleinsäure und die jeweils in Tabelle 2 angegebene Phosphorverbindung vorgelegt. Der Reaktor wurde dann verschlossen, 3 x mit Stickstoff bis zu einem Druck von 4 bar abgepreßt und der Reaktorinhalt anschließend unter Druck auf eine Temperatur von 120°C erhitzt. Danach gab man innerhalb von 8 Stunden eine gut gekühlte Lösung aus 2273 Teilen Acrylsäure, 649 Teilen 30 %-iges Wasserstoffperoxid und 1000 Teilen Wasser gleichmäßig zu. Danach erhitzte man das Reaktionsgemisch noch eine Stunde auf 120°C, kühlte es dann auf 50°C ab und neutralisierte es mit 3380 Teilen 50 %-iger wäßriger Natronlauge. Der K-Wert der so erhaltenen Copolymerisate betrug 30, entsprechend einem Molekulargewicht von 20 000.

**Vergleichsbeispiel 3**

Das Beispiel 4 wurde mit der Ausnahme wiederholt, daß in Abwesenheit einer Phosphorverbindung gearbeitet wurde. Man erhielt eine Lösung eines Polymerisates mit einem K-Wert von 30 (Molekulargewicht 20 000). Die Transmission, gemessen an einer 10 %-igen wäßrigen Polymerlösung betrug 41 %.

**Vergleichsbeispiel 4**

Das Beispiel 5 wurde mit der Ausnahme wiederholt, daß an Stelle von phosphoriger Säure die gleiche Menge des Tetranatriumsalzes der Ethylendiamintetraessigsäure eingesetzt wurde. Der K-Wert (2 %-ig in Wasser) betrug 30, entsprechend einem Molekulargewicht von 20 000.

| Beispiel | Teile | Zusatz an Phosphorverbindung | Transmission der 10 %-igen wäßrigen Polymerlösungen [%] |
|---|---|---|---|
| 4 | 60 | phosphorige Säure, 50 %-ig | 89 |
| 5 | 30 | phosphorige Säure, 50 %-ig | 81 |
| 6 | 30 | Ethylendiaminotetramethylen-tetraphosphonsäure | 96 |
| 7 | 6 | Ethylendiaminotetramethylen-tetraphosphonsäure | 95 |
| 8 | 3 | Ethylendiaminotetramethylen-tetraphosphonsäure | 93,5 |
| 9 | 3 | 1-Hydroxyethan-1,1-Diphosphonsäure | 94 |
| 10 | (1,5 (1,5 | 1-Hydroxyethan-1,1-Diphosphonsäure) Aminotrismethylen-triphosphonsäure) Mischung | 96 |
| 11 | 6 | Ethylentriaminopentamethylen-pentaphosphonsäure | 95 |
| Vergleichs-beispiel | | | |
| 3 | - | - | 41 |
| 4 | 30 | Tetranatriumsalz der Ethylen-diamintetraessigsäure | 35 |
| 5 | 30 | Natriumhypophosphit | 76 |
| 6 | 150 | Natriumhypophosphit | 88 |
| 7 | 10 20 | (Natriumhypophosphit) (phosphorige Säure, 50 %-ig) Mischung | 85 |

**Beispiele 12 bis 17**

Diese Beispiele wurden in einem 8 l fassenden Edelstahlreaktor durchgeführt, der mit einem Rührer, Rückflußkühler, Einrichtungen zum Arbeiten unter Stickstoff und mit einer Zulaufvorrichtung versehen war. Man legte jeweils 1070 Teile Wasser und die in Tabelle 3 unter Monomer I angegebenen Stoffe und gegebenenfalls 50 %-ige wäßrige Natronlauge vor, erhitzte die Vorlage auf 100°C bis zum Sieden und fügte dann die unter Monomer II angegebenen Verbindungen, separat davon eine wäßrige Lösung des in der Tabelle 3 angegebenen Initiators in 500 Teilen Wasser und unabhängig davon eine Lösung des Polymerisationsreglers und einer Phosphorverbindung, die jeweils in Tabelle 3 angegeben sind, gelöst in jeweils 500 Teilen Wasser innerhalb von 5 Stunden kontinuierlich zu. Anschließend erhitzte man das Reaktionsgemisch noch 2 Stunden zum Sieden und kühlte es danach ab. Die K-Werte der Polymerisate, die entsprechenden Molekulargewichte und die Transmission von 10 %-igen wäßrigen Polymerlösungen sind ebenfalls in Tabelle 3 angegeben.

**Tabelle 3**

| Beispiel | Monomer I [Teile] | Natron- lauge [Teile] | Monomer II [Teile] | Initiator [Teile] | Regler [Teile] |
|---|---|---|---|---|---|
| 12 | 96 AS | - | 3000 AS | 60 Na$_2$S$_2$O$_8$ | 60 ME |
| 13 | 823 IS | 912 | 2273 AS | 240 H$_2$O$_2$, 50 %-ig | - |
| 14 | 96 MAS | - | 3000 MAS | 60 Na$_2$S$_2$O$_8$ | 90 ME |
| 15 | 823 MS | 930 | 1000 HEA 1273 AS | 240 H$_2$O$_2$, 50 %-ig | - |
| 16 | 48 AS | - | 1500 MAS | 45 Na$_2$S$_2$O$_8$ | 90 ME |
| 17 | 1096 MS | 960 | 1500 AS 500 VAc 500 MA 500 DEAEA | 240 H$_2$O$_2$, 50 %-ig | - |

**Tabelle 3 (Fortsetzung)**

| Beispiel | P-Verbindung [Teile] | K-Wert | Molekular- gewicht | Trans- mission [%] |
|---|---|---|---|---|
| 12 | 30 phosphorige Säure, 50 %-ig | 29 | 10 000 | 98 |
| 13 | 30 phosphorige Säure, 50 %-ig | 61 | 100 000 | 93 |
| 14 | 30 phosphorige Säure, 50 %-ig | 22 | 5 000 | 97 |
| 15 | 6 1-Hydroxyethan-1,1-diphosphonsäure | 36 | 30 000 | 93 |
| 16 | 6 1-Hydroxyethan-1,1-diphosphonsäure | 19 | 4 000 | 91 |
| 17 | 15 phosphorige Säure, 50 %-ig 6 1-Hydroxyethan-1,1-diphosphonsäure | 39 | 40 000 | 92 |

| AS: | Acrylsäure | IS: | Itaconsäure | MA: | Methylacrylat |
|---|---|---|---|---|---|
| MAS: | Methacrylsäure | HEA: | Hydroxyethylacrylat | DEAEA: | Diethylaminoacrylat |
| MS: | Maleinsäure | VAc: | Vinylacetat | ME: | Merkaptoethanol |

**Patentansprüche**

1. Verfahren zur Herstellung von Carboxylgruppen enthaltenden Polymerisaten, die zumindest in neutralisierter Form wasserlöslich sind, durch Polymerisieren von monoethylenisch ungesättigten C$_3$- bis C$_5$Carbonsäuren, gegebenenfalls mit carboxylgruppenfreien copolymerisierbaren ethylenisch ungesättigten Monomeren, in wäßriger Lösung unter Verwendung von Polymerisationsinitiatoren, *dadurch gekennzeichnet*, daß man die Polymerisation in Gegenwart von 0,01 bis 5 Gew.-%, bezogen auf die Monomeren, an Verbindungen aus der Gruppe hypodiphosphorige Säure, wasserlösliche Salze der hypodiphosphorigen Säure, phosphorige Säure, wasserlösliche Salze der phosphorigen Säure, diphosphorige Säure, wasserlösliche Salze der diphosphorigen Säure, wasserlöslichen -PO(OH)$_2$-Gruppen enthaltenden Verbindungen und/oder deren wasserlöslichen Salzen durchführt.

2. Verfahren nach Anspruch 1, *dadurch gekennzeichnet*, daß man phosphorige Säure oder deren Natrium-, Kalium- und Ammoniumsalze einsetzt.

3. Verfahren nach Anspruch 1, *dadurch gekennzeichnet*, daß man als wasserlösliche -PO(OH)$_2$-Gruppen enthaltende Verbindungen Aminotrismethylentriphosphonsäure-Pentanatriumsalz, Ethylendiaminotetramethylentetraphosphonsäure, Ethylentriaminopentamethylenphosphonsäure und/oder 1-Hydroxyethan-1,1-Diphosphonsäure einsetzt.

4. Verfahren nach den Ansprüchen 1 bis 3, *dadurch gekennzeichnet*, daß man als Carbonsäuren Acrylsäure, Methacrylsäure, Maleinsäure und/oder Itaconsäure einsetzt.

5. Verfahren nach den Ansprüchen 1 bis 3, *dadurch gekennzeichnet*, daß man Copolymerisate aus Acrylsäure und Methacrylsäure, Copolymerisate aus Acrylsäure und Maleinsäure und Copolymerisate aus Acrylsäure und Itaconsäure herstellt.

6. Verfahren nach den Ansprüchen 1 bis 5, *dadurch gekennzeichnet*, daß man die Polymerisation zusätzlich in Gegenwart von 0,5 bis 15 Gew.-%, bezogen auf die Monomeren, eines SH-enthaltenden Polymerisationsreglers durchführt.

**Claims**

1. A process for the preparation of a carboxyl-containing polymer which is water-soluble at least in the neutralized form by polymerizing a monoethylenically unsaturated $C_3$-$C_5$-carboxylic acid in the presence or absence of a carboxyl-free copolymerizable ethylenically unsaturated monomer in aqueous solution using a polymerization initiator, wherein the polymerization is carried out in the presence of from 0.01 to 5 % by weight, based on the monomers, of a compound from the group consisting of hypodiphosphorous acid, water-soluble salts of hypodiphosphorous acid, phosphorous acid, water-soluble salts of phosphorous acid, diphosphorous acid, water-soluble salts of diphosphorous acid, water-soluble -$PO(OH)_2$-containing compounds and their water-soluble salts.

2. A process as claimed in claim 1, wherein phosphorous acid or a sodium, potassium or ammonium salt thereof is used.

3. A process as claimed in claim 1, wherein the water-soluble -$PO(OH)_2$-containing compound used in pentasodium aminotrismethylenetriphosphonate, ethylenediaminotetramethylenetetraphosphonic acid, ethylenetriaminopentamethylenephosphonic acid or 1-hydroxyethane-1,1-diphosphonic acid.

4. A process as claimed in any of claims 1 to 3, wherein the carboxylic acid used is acrylic acid, methacrylic acid, maleic acid or itaconic acid.

5. A process as claimed in any of claims 1 to 3, wherein a copolymer of acrylic acid and methacrylic acid, of acrylic acid and maleic acid, or of acrylic acid and itaconic acid is prepared.

6. A process as claimed in any of claims 1 to 3, wherein the polymerization is carried out in the presence of, in addition, from 0.5 to 15 % by weight, based on the monomers, of an SH-containing polymerization regulator.

**Revendications**

1. Procédé de préparation de polymérisats contenant des groupes carboxyle, qui sont solubles dans l'eau au moins sous forme neutralisée, par polymérisation en solution aqueuse, avec utilisation d'initiateurs de polymérisation, d'acides carboxyliques en $C_3$ à $C_5$ insaturés monoéthyléniquement, éventuellement avec des monomères insaturés éthyléniquement copolymérisables, exempts de groupes carboxyle, caractérisé par le fait que l'on effectue la polymérisation en présence de 0,01 à 5 % en poids, rapporté aux monomères, de composés appartenant au groupe acide hypodiphosphoreux, sels solubles dans l'eau de l'acide hypodiphosphoreux, acide phosphoreux, sels solubles dans l'eau de l'acide phosphoreux, acide diphosphoreux, sels solubles de l'acide diphosphoreux, composés contenant des groupes -$PO(OH)_2$ solubles dans l'eau et/ou leurs sels solubles dans l'eau.

2. Procédé selon la revendication 1, caractérisé par le fait que l'on fait agir des sels phosphoreux ou leurs sels de sodium, potassium et ammonium.

3. Procédé selon la revendication 1, caractérisé par le fait que l'on fait agir, comme composés contenant des groupes -$PO(OH)_2$ solubles dans l'eau, le sel pentasodique d'acide aminotrisméthylentriphosphonique, l'acide éthylendiaminotétraméthylentétraphosphonique, l'acide ethylenetriaminopentaméthylenphosphonique et/ou l'acide 1-hydroxyéthan-1,1-diphosphonique.

4. Procédé selon la revendication 1 à 3, caractérisé par le fait que l'on fait agir, comme acides carboxyliques, l'acide acrylique, l'acide méthacrylique, l'acide maléique et/ou l'acide itaconique.

5. Procédé selon les revendications 1 à 3, caractérisé par le fait que l'on prépare des copolymérisats à partir d'acide acrylique et d'acide méthacrylique, des copolymérisats à partir d'acide acrylique et acide maléique et les copolymérisats à partir d'acide acrylique et d'acide itaconique.

6. Procédé selon les revendications 1 à 5, caractérisé par le fait que l'on effectue la polymérisation en outre en présence de 0,5 à 15 % en poids, rapportés aux monomères, d'un régulateur de polymérisation contenant -SH.